# EUROPEAN PATENT APPLICATION

(11) **EP 1 878 479 A1**
(43) Date of publication of application: **16.01.2008**
(21) Application number: 06014657.8
(22) Date of filing: 14.07.2006
(51) Int. Cl.: B01D 5/00, B01D 1/00, C23G 5/00, B08B 3/00

(54) **Method and system for treating transformer components**

(71) Applicant: Shawline International LLC, New York NY 10983 (US)
(72) Inventor: Horvath, Erno, 1150 Wien (AT)
(74) Representative: Bottero, Claudio

(57) **Abstract**

A method for treating transformer components contaminated with transformer oil comprises the steps of:
a) providing a treatment chamber (1) for at least one transformer component (C) to be treated;
b) forming in the treatment chamber (1) a solvent vapour atmosphere of a solvent for said transformer oil;
c) extracting the transformer oil from the at least one component (C) by means of condensation of the solvent vapour on the component (C);
d) removing from the treatment chamber (1) a liquid extraction mixture comprising the solvent and the transformer oil extracted from the at least one component (C).

The invention also refers to a system for carrying out such method.

## Description

The present invention refers, in a first aspect thereof, to a method for treating transformer components.

In a second aspect thereof, the invention refers to a system for carrying out such method.

Within the framework of the present description and of the subsequent claims, with the term: transformer components, are in particular meant those components forming the active part of a transformer, such as for example the core, the windings, the connections with high and low voltage circuits, the voltage switches, the armatures and the insulating components of the heads.

In many transformers, in particular in large- power transformers for electric energy distribution or special transformers for industrial applications, the active part of the transformer operates immersed in a dielectric transformer oil contained in the transformer tank. Such oil is used as a cooling and insulating means. Typically, transformer oils used today are mineral oils of the paraffinic or naphthenic type.

Each time the active part of a transformer containing transformer oil is extracted from the transformer in order to perform operations on it, there arises the need to appropriately treat the components of the active part for substantially removing therefrom the oil which has soaked and/or covered them during operation. This is because, after the extraction from the transformer, such oil is released outside, sometimes also in considerable amounts, in liquid and/or vapour form. This makes performing subsequent operations on the extracted components difficult and produces unpleasant smells in the work environment.

The above-mentioned need for a treatment arises in the case of scrapping a transformer at the end of its useful life, but above all in the case of repair or recovery interventions on the components of the active part. Nowadays, in fact,' the high purchase price of large power and special transformers, as well as the difficulty of finding raw materials such as copper and laminations in a short time and at acceptable prices, makes increasingly attractive reuse of used transformers with characteristics revised in relation with new operating parameters, the upgrading thereof or reparation in case of damage. All of these operations require the extraction of the active part from the transformer and the subsequent intervention on it.

The technical problem underlying the present invention is that of providing a method for treating transformers components contaminated with transformer oil in order to remove such oil therefrom, which method ensures a substantially complete oil removal, preventing the uncontrolled release into the work environment, and at the same time allows reducing to a minimum component handling by the workers during treatment.

According to a first aspect thereof, the invention therefore refers to a method for treating transformer components contaminated with transformer oil, comprising the steps of:
a) providing a treatment chamber for at least one transformer component to be treated;
b) forming in said treatment chamber a solvent vapour atmosphere of a solvent for said transformer oil;
c) extracting said transformer oil from said at least one component by means of condensation of said solvent vapour on said component;
d) removing from said treatment chamber a liquid extraction mixture comprising said solvent and the transformer oil extracted from said at least one component.

According to the present method, the removal of the oil occurs by means of the condensation of an appropriate solvent on the component. All treatment operations for the removal of the oil are advantageously carried out in controlled conditions within a closed environment, defined by the treatment chamber. Workers' contact with the components to be treated is therefore substantially absent or limited to the insertion of these components into the treatment chamber. Moreover, the treatment residues, constituted by a mixture of oil and solvent, are confined in the treatment chamber and may be extracted therefrom in a controlled manner, avoiding their dispersion in the environment during the treatment.

The method of the invention therefore allows obtaining a substantially complete removal of the oil from the components to be treated, preventing it to be dispersed in the environment, with a minimum contact between the components and the assigned workers.

Preferably, the method of the invention further comprises the step of:
e) periodically spraying the at least one component with the solvent in liquid state and/or with the liquid extraction mixture at a temperature below the temperature of said at least one component.

Such spraying advantageously has the double effect of contributing to solvent removal by washing away the surfaces, and of cooling the at least one component by maintaining it at a temperature suitable for ensuring a continuous condensation of the solvent in vapour state on it. The treatment can thus be conveniently extended over time until the oil is completely removed, without any need to open the chamber for actively cooling the component or to wait long time intervals in order to reach a cooling of the component suitable for going further on with the treatment.

Preferably, the aforementioned treatment step e) is actuated by at least partially recirculating the liquid extraction mixture in the treatment chamber. In this way, the liquid extraction mixture can be advantageously used, also before undergoing subsequent treatments, for washing and cooling the at least one component, thus limiting the use of pure solvent for this purpose.

Preferably, the method further comprises the step of:
f) cooling the liquid extraction mixture before actuating said spraying step e).

The recirculated liquid extraction mixture can thus effectively contribute to the cooling of the component also when it is removed from the treatment chamber at a temperature higher than that of the component itself.

Preferably, the method of the invention further comprises the step of:
g) treating the liquid extraction mixture for separating the solvent from the transformer oil removed from said at least one component.

More preferably, the aforementioned separation is actuated by means of distillation of the liquid extraction mixture.

In this case, the method of the invention preferably further comprises the steps of:
h) condensing the solvent distilled from the liquid extraction mixture, and
i) recirculating the condensed solvent in the treatment chamber to use it in said spraying step e).

This advantageously allows recovering the solvent to reuse it in either the same or a subsequent treatment processes upon appropriate storage, therefore limiting the overall amount of solvent required.

Preferably, the method of the invention further comprises the steps of:
l) periodically extracting vapour of said solvent from said treatment chamber;
m) condensing the extracted vapour, and
n) recirculating the condensed vapour in said treatment chamber.

The extraction of solvent vapour from the treatment chamber allows controlling the pressure inside the chamber. The extracted vapour can advantageously be condensed and reused, similarly to what said with reference to the solvent separated from the liquid extraction mixture.

The temperature and pressure values in the treatment chamber are chosen so as to allow the formation and conservation of the solvent vapour atmosphere, as well as the condensation of the vapour on the component to be treated.

Preferably, temperature and pressure in said chamber are maintained substantially constant.

The pressure in the treatment chamber is preferably lower than the atmospheric pressure. More preferably, it is between about 0.5 and 0.7 bar.

The temperature in the treatment chamber is preferably between about 100°C and 130°C, more preferably between about 105°C and 110°C.

Preferably, the difference between the temperature in the treatment chamber and the temperature of the solvent and/or liquid extraction mixture sprayed in said spraying step e) is between about 95°C and 145°C.

Preferably, the temperature of the solvent and/or liquid extraction mixture sprayed in said spraying step e) is between about 5°C and 25°C, more preferably between about 10°C and 20°C.

Each spraying carried out in the aforementioned spraying step e) has a duration preferably between about 15 and 60 seconds, while the time interval between one spraying and the subsequent spraying is preferably between about 10 and. 20 minutes.

The method of the invention is preferably used for decontamination from transformer oil of the paraffinic or naphthenic type or combinations thereof.

The employed solvent is preferably an organic solvent chosen from the group comprising: ethane, hexane, dearomatised heptane, trichloroethane, trieline and combination thereof.

In a second aspect thereof, the invention refers to a system for treating transformer components contaminated with transformer oil, comprising:
- a fluid-tight container wherein a treatment chamber for at least one transformer component is defined;
- a plurality of nozzles positioned in said treatment chamber and adapted to spray a solvent for said transformer oil;
- a device for vacuum production in fluid communication with said treatment chamber;
- at least one heating element in heat exchange relationship with said treatment chamber;
- at least one discharge line of a liquid extraction mixture comprising said solvent and the transformer oil extracted from said at least one component.

Such system allows carrying out a decontamination treatment from transformer oil, by means of condensation on the at least one component to be treated of a solvent vapour atmosphere formed and maintained in the treatment chamber, thus obtaining all of the advantages mentioned above with reference to the method of the invention.

Preferably, the nozzles of the treatment chamber are substantially uniformly distributed at the upper and lateral walls of the fluid-tight container.

The system of the invention preferably comprises a primary circuit of the solvent in fluid -communication with the treatment chamber for feeding said nozzles with solvent in the liquid state drawn from a solvent storage tank, and for bringing solvent extracted from the treatment chamber back to the storage tank.

Preferably, the primary circuit comprises a condenser adapted to condense solvent vapour extracted from the treatment chamber by means of the device for vacuum production in fluid communication with said chamber.

Preferably, the system of the invention comprises a recirculation circuit of the liquid extraction mixture for at least partially recirculating such mixture in the treatment chamber.

Preferably, the recirculation circuit comprises a heat exchanger adapted to cool the liquid extraction mixture.

It is thus possible to at least partially recirculate the liquid extraction mixture in the treatment chamber and use it, together with liquid solvent fed by means of the primary solvent circuit, to wash and cool the at least one component to be treated.

The recirculation circuit preferably comprises also a by-pass line of the heat exchanger, that allows excluding the heat exchanger if it is not necessary to cool the liquid extraction mixture before feeding it again in the treatment chamber.

Preferably, the facility of the invention comprises a solvent recovery circuit for recovering solvent from the liquid discharge mixture and feeding it again in the treatment chamber.

This advantageously allows both recovering the used solvent and carrying out the treatment in a substantially closed way, limiting mass exchanges between the system and environment and therefore minimising the possibility of dispersion during the treatment.

The recovery circuit preferably comprises a distillation unit of the liquid discharge mixture adapted to separate solvent from the transformer oil extracted from the at least one component.

The recovery circuit preferably comprises also a condenser adapted to condense solvent vapour produced by the distillation unit.

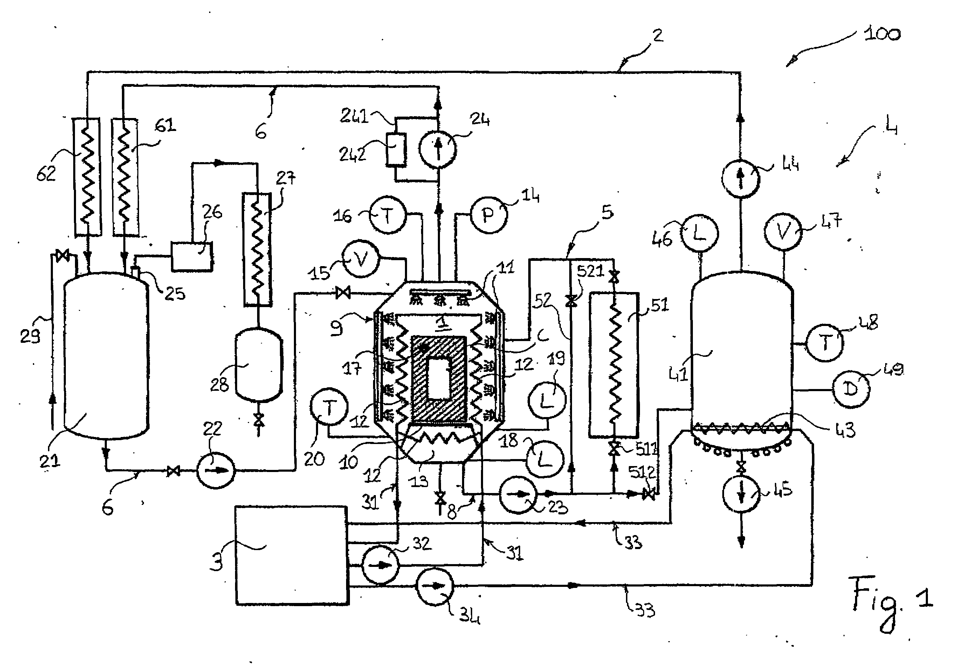

Further characteristics and advantages of the present invention shall become clearer from the following description of a preferred embodiment thereof, made hereafter, for indicating and not limiting purposes, with reference to the attached figure 1, which schematically illustrates a system according to the invention for the treatment of transformers components contaminated with transformer oil.

In such figure, a system according to the invention is generally shown with reference numeral 100.

The system 100 comprises a fluid-tight container 9 wherein a treatment chamber 1 is defined, adapted to receive at least one component C of a transformer, such as for example the core, the windings, the connections with high and low voltage circuits, the voltage switches, the armatures and the insulating components of the heads, in order to carry out on it a transformer oil decontamination treatment, as will be better described below with reference to the method according to the present invention.

The container 9 comprises a fluid-tight load door (not shown) which allows the introduction and extraction of a component carrier trolley 10, whereon the component C to be treated can be loaded, and at least one inspection porthole (not shown), preferably made of safety glass.

A plurality of- nozzles 11 is provided-inside the treatment chamber 1. The nozzles 11 are uniformly distributed at the lateral and upper walls of the container 9 and are positioned so as to spray in a substantially uniform manner.

Heating elements 12 are also provided inside the treatment chamber 1 for maintaining the temperature required for the treatment. In the preferred embodiment here illustrated, the heating elements 12 are composed of coils connected to a circuit 31 of a heating fluid fed by a thermal station 3 by means of a circulation pump 32. The heating elements 12 can also be of other types, e. g. electric such as power resistors.

A vacuum pump 24, for example a mechanical single-stage lobe pump or a piston pump for high vacuum, in any case of conventional type, is in fluid communication with the treatment chamber 1. Such pump allows maintaining in the treatment chamber the vacuum level required for the treatment, as well as completely evacuating the solvent vapour from the treatment chamber before opening the container 9 at the end of the treatment. The vacuum pump 24 is provided with a by-pass line 241 with pressure valve 242, preferably enclosed in a fluid-tight pipe in order to avoid solvent vapour dispersions in the environment.

In the lower part of the treatment chamber 1 a collecting bottom 13 is defined, wherein during the treatment a liquid extraction mixture comprising solvent and the transformer oil extracted from the component C is collected. Such mixture is removed from the treatment chamber 1 by means of a discharge line 8 equipped with a pump 23 for liquids.

The treatment chamber 1 is provided with conventional measurement equipment for measuring temperature and pressure conditions therein. In particular, a pressure sensor 14, a vacuometer 15, and a temperature sensor 16 are provided, as well as a flexible thermometric probe 17 that can be inserted in a recess of component C, for example a hole through the stacked laminations of a transformer core, in order to measure the temperature reached by such component during the treatment. At the collecting bottom 13 a minimum level sensor 18 and a maximum level sensor 19 are further provided to control the level of the liquid extraction mixture accumulated in the collecting bottom 13, as well as a temperature sensor 20 to measure temperature thereof.

Although in the preferred embodiment described here the treatment chamber 1 is defined within the container 9 suitably provided for such purpose, in alternative embodiments, not described in detail and which can be advantageous for some transformer constructive forms and/or for large size transformers, the treatment chamber 1 can also be defined within the tank itself of the transformer whose components must be treated. In this case, it is essentially required to equip the cover of the transformer tank for the insertion of nozzles 11, heating elements 12 and above-described measurement instrumentation.

A primary circuit 6 of the solvent is in fluid communication with the treatment chamber 1 for feeding nozzles 11 with solvent in liquid state and recovering solvent vapour extracted from the treatment chamber 1 by means of vacuum pump 24.

The primary circuit 6 comprises a solvent storage tank 21, from which the solvent is drawn by means of the feeding pump 22 for feeding the nozzles 11 and to which the solvent extracted in vapour form from the treatment chamber 1 by means of the vacuum pump 24 is returned, after condensation at a condenser 61.

The storage tank 21 is provided with a make-up line 29 of the solvent, through which it is possible to feed fresh solvent in the primary circuit 2, and with at least one relief valve 25 for solvent vapours which can be generated in the tank 21. Downstream of the relief valve 25, means are provided for abating the solvent vapour emissions, preferably comprising a molecular sieve filter 26. Such filter is equipped with electrical resistors (not shown) for periodically eliminating the solvent held by the filter. The solvent vapours extracted by the filter are condensed by means of a condenser 27 and sent to a recovery tank 28. Of course, other suitable types of abatement means can also be employed, for example activated carbon filters.

The system 100 further comprises a recirculation circuit 5 of the liquid extraction mixture, which can be selectively put in fluid communication with the discharge line 8 of the treatment chamber 1, for at least partially recirculating such mixture in the treatment chamber 1 and spraying it by means of the nozzles 11 on the component C. The adjustment of the flow rate of the recirculated liquid extraction mixture, and possibly the complete exclusion of the recirculation circuit 5, is actuated by means of suitable valves 511 and 512, preferably automatically operated and in any case of conventional type, arranged downstream of the pump 23.

The recirculation circuit 5 comprises a heat exchanger 51 adapted to cool the liquid extraction mixture and a by-pass line 52 of the heat exchanger 51, with respective on-off valve 521, which allows sending the liquid extraction mixture directly to the treatment chamber 1 when cooling thereof is not necessary.

The system 100 further comprises a recovery circuit 2 of the solvent for recovering solvent from the liquid discharge mixture and reusing it in the treatment chamber 1. The recovery circuit 2, which can be selectively put in fluid communication with the discharge line 8 of the treatment chamber 1 by means of the valve 512, comprises a treatment group of the liquid extraction mixture for separating the solvent from the mixture. In the preferred embodiment illustrated here, such treatment group comprises a distillation unit 4.

The distillation unit 4 comprises a distiller 41 of conventional type to which a vacuum pump 44 and a liquid pump 45 are connected.

The distiller 41 comprises, at its lower portion, heating elements 43 for heating the liquid extraction mixture, thus determining the evaporation of the solvent. In the preferred embodiment illustrated here, the heating elements 43 are made of one or more coils connected to a circuit 33 of a heating fluid fed by the thermal station 3 by means of a circulation pump 34. It is not excluded, however, that such elements are also of other types, e.g. electric such as power resistors.

The vapour phase comprising the solvent is removed from the upper portion of the distiller 41 by means of vacuum pump 44, while the liquid phase comprising the transformer oil accumulated on the bottom of the distiller 44 is removed by means of the discharge pump 45 and sent to a suitable collection tank (not shown).

The distiller 41 is provided with conventional measurement equipment, comprising in particular, in the preferred embodiment of the system shown here, a maximum level sensor 46, a vacuometer 47, a temperature sensor 48 and a densimeter 49, adapted to determine the density of the liquid phase present on the bottom of the distiller 41.

A control unit (not shown) allows controlling the automatic operation of the system 100 based on the set operating parameters and on the values measured by the measurement equipment associated with the above described treatment chamber 1 and the distiller 4. In particular, the control unit serves to:
- operate the circulation pump 32 and the vacuum pump 24 to maintain the desired temperature and pressure conditions in the treatment chamber 1;
- operate the feed pump 22 for feeding the nozzles 11 at the required spraying frequency and with the required solvent flow rate;
- operate the circulation pump 34 and the vacuum pump 44 to maintain the desired temperature and pressure conditions in the distiller 41;
- operate the valves 511, 512, 521 to adjust the liquid extraction mixture flow rates to the recirculation circuit 5 and to the recovery circuit 2.

With reference to the above described system 100, a preferred embodiment of the method according to the invention for treating transformer components contaminated with transformer oil will now be presented.

In a first step of the method, a transformer component C to be treated for removing therefrom the transformer oil that has contaminated it is positioned at room temperature into the treatment chamber 1 defined in the container 9.

The transformer oil referred to is typically a paraffinic or naphthenic mineral oil.

Before fluid-tight sealing of the container 9, the thermometric probe 17 is inserted into a recess of the component C, so to have an indication of the temperature reached by the mass of the component C during treatment.

In a subsequent step of the method, inside the treatment chamber 1, a preferably saturated vapour atmosphere is formed of an appropriate solvent for the aforementioned transformer oil, for example an organic solvent such as ethane, hexane, dearomatised heptane, trichloroethane, trieline or another solvent with similar characteristics, which those skilled in the art will be able to select based on specific needs or availability.

Such atmosphere is created by suitably adjusting, based on the solvent type, the temperature and pressure in the treatment chamber 1 and spraying liquid solvent by means of the nozzles 11.

In particular, by means of the heating elements 12, fed by the circulation pump 32 with a heating fluid, e. g. water, coming from the thermal station 3, the temperature in the treatment chamber 1 is gradually raised with respect to room temperature. Simultaneously or subsequently, by means of vacuum pump 24, the pressure is instead lowered below the atmospheric pressure, determining a certain vacuum level in the treatment chamber 1. Once a temperature and pressure has been reached suitable for allowing solvent vaporisation, the spraying of the solvent by means of the nozzles 11 is initiated.

In steady state operating conditions, the temperature in the treatment chamber 1 is preferably between about 100°C and 130°C, more preferably between about 105°C and 110°C. The pressure is preferably between about 0.5 bar and 0.7 bar. These temperature and pressure conditions in the treatment chamber 1 are preferably maintained constant during the treatment.

In these conditions, the temperature of the component C being less than the temperature of the atmosphere in the treatment chamber 1, the extraction of the transformer oil from the component C is obtained by means of condensation of the solvent vapour on the surfaces thereof. While condensing, the solvent bears the oil into solution and drags it towards the collecting bottom 13 in the form of a liquid extraction mixture.

For maintaining the aforementioned pressure conditions in the treatment chamber 1, vacuum pump 24, preferably automatically operated by means of the control unit based on the pressure values measured by pressure sensor 14 and/or vacuometer 15, periodically extracts solvent vapour from the treatment chamber 1. By means of the primary circuit 6 of the solvent, the extracted vapour is subsequently condensed at the condenser 61 and sent to the solvent storage tank 21 to be reused in the spraying step.

In a further step of the method, the liquid extraction mixture is removed from the treatment chamber 1. This is obtained by periodically activating, preferably automatically by means of the control unit, the pump 23 on the discharge line 8 of the treatment chamber 1.

In a further step of the method, at least partially simultaneous with the oil extraction step described above, the component C is periodically sprayed through the nozzles 11 with a solvent in the liquid state and/or with the liquid extraction mixture, suitably recirculated in the treatment chamber 1 by means of the recirculation circuit 5.

The spraying occurs at a temperature lower than that maintained in the treatment chamber 1, the temperature difference preferably being between- about 95°C and 145°C. Preferred temperature values of the sprayed liquid solvent and/or liquid extraction mixture are between about 5°C and 25°C, typical operating values between about 10°C and 20°C. In the case of the liquid extraction mixture, generally removed from the treatment chamber 1 at a higher temperature with respect to the above values, it is possible to provide a cooling step which can be actuated by means of the heat exchanger 51 while recirculating the mixture itself.

The spraying cycles actuated in the spraying step are automatically controlled, both in respect of the duration of each spraying and of the interval between one spraying and the next, by means of the above described control unit. The control is performed on the basis of the measured parameters, in particular the temperature of the component C measured by flexible thermometric probe 17 and the temperature and pressure of the treatment chamber 1, respectively measured by temperature sensor 16 and pressure sensor 14 and/or vacuometer 15. Preferably, each spraying has a duration that can vary between about 15 and 60 seconds and the interval between one spraying and the next is between about 10 and 20 minutes.

The periodic spraying with liquid solvent and/or liquid extraction mixture has the double effect of washing the surfaces of the component C, contributing to the removal of the oil, and cooling the component C during the process, thus allowing delaying the component's thermal equilibrium with the internal environment of the treatment chamber 1 to be reached.

If necessary, when the component C has reached a temperature close to that of the treatment chamber 1, and therefore the solvent vapour condensation no more takes place or takes place in no longer sufficient limit, it is possible to suspend the heating of the treatment chamber 1, stopping the circulation pump 32 of the heating fluid, for cooling component C by means of prolonged spraying, and subsequently to restart the treatment, without need to open the container 9.

The step of recirculating the liquid extraction mixture by means of the recirculation circuit 5 is preferably actuated depending on the level of liquid extraction mixture collected in the collecting bottom 13.

As long as the level of liquid extraction mixture in the collecting bottom 13 remains below a predetermined maximum level detected by level sensor 19, the valve 512 is kept closed and the valve 511 is open. In this way the liquid extraction mixture is completely recirculated in the treatment chamber 1.

The step of recirculating the liquid extraction mixture can comprise a cooling step, as set forth above, or, if the temperature of the liquid extraction mixture is low enough, it can be actuated without cooling or by cooling only a part of the total recirculated flow. Such options are preferably automatically controlled by the control unit, based on the signal from the temperature sensor 20 provided at the collecting bottom 13, by appropriately operating on-off valves 511 and 521.

When instead the level of liquid extraction mixture in the collecting bottom 13 exceeds the maximum level, on-off valve 512 is opened and the liquid extraction mixture is at least partially sent to the recovery circuit 2 of the solvent.

Through the recovery circuit 2 a treatment step of the liquid extraction mixture is actuated so as to separate the solvent from the extracted oil. Such treatment, in the preferred embodiment of the method described here, is carried out in conventional manner by means of distillation at the distiller 41.

The vapour phase containing the solvent is extracted from the distiller 41 by means of the vacuum pump 44, condensed by means of the condenser 62 and sent to the solvent storage tank 21 for reuse in the spraying step. The liquid phase containing the transformer oil which is collected at the bottom of the distiller 41 is instead periodically discharged by means of the extraction pump 45 and sent to an appropriate collection tank (not shown). The extraction pump 45 is preferably automatically operated by the control unit based on a signal of densimeter 49, provided for indicating the attainment of the representative density of the particular transformer oil involved in the treatment.

The overall duration of a treatment for obtaining a substantially complete oil removal from a transformer component C according to the preferred embodiment of the method described above can vary within rather wide limits, depending on the thermal capacity and particular conformation of the component C to be treated. As an example, in the case where component C is a transformer core, the treatment can typically require 5-6 hours.

## Claims

1. Method for treating transformer components contaminated with transformer oil, comprising the steps of:
a) providing a treatment chamber (1) for at least one transformer component (C) to be treated;
b) forming in said treatment chamber (1) a solvent vapour atmosphere of a solvent for said transformer oil;
c) extracting said transformer oil from said at least one component (C) by means of condensation of said solvent vapour on said component (C);
d) removing from said treatment chamber (1) a liquid extraction mixture comprising said solvent and the transformer oil extracted from said at least one component (C).

2. Method according to claim 1, further comprising the step of:
e) periodically spraying said at least one component (C) with said solvent in liquid state and/or with said liquid extraction mixture at a temperature below the temperature of said at least one component (C).

3. Method according to claim 2, wherein said spraying step e) is actuated by at least partially recirculating said liquid extraction mixture in said treatment chamber (1).

4. Method according to claim 3, further comprising the step of:
f) cooling said liquid extraction mixture before actuating said spraying step e).

5. Method according to any one of the preceding claims, further comprising the step of:
g) treating said liquid extraction mixture for separating said solvent from said transformer oil removed from said at least component (C).

6. Method according to claim 5, wherein said separation step g) is actuated by means of distillation of said liquid extraction mixture.

7. Method according to claim 6, further comprising the step of:
h) condensing the solvent distilled from said liquid extraction mixture, and
i) recirculating the condensed solvent in said treatment chamber (1) in order to use it in said spraying step e).

8. Method according to any one of the preceding claims, further comprising the steps of:
l) periodically extracting vapour of said solvent from said treatment chamber (1);
m) condensing the extracted vapour, and
n) recirculating the condensed vapour in said treatment chamber (1).

9. Method according to any one of the preceding claims, wherein the temperature and the pressure in said treatment chamber (1) are substantially constant.

10. Method according to any one of the preceding claims, wherein the pressure in said treatment chamber (1) is lower than the atmospheric pressure.

11. Method according to claim 8, wherein the pressure in said treatment chamber (1) is between about 0.5 bar and 0.7 bar.

12. Method according to any one of the preceding claims, wherein the temperature in said treatment chamber (1) is between about 100°C and 130°C.

13. Method according to any one of the claims 2-12, wherein the difference between the temperature in said treatment chamber (1) and the temperature of said solvent and/or said liquid extraction mixture sprayed in said spraying step e) is between about 95°C and 145°C.

14. Method according to any one of the claims 2-13, wherein the temperature of said solvent and/or said liquid extraction mixture sprayed in said spraying step e) is between about 5°C and 25°C.

15. Method according to any one of the claims 2-14, wherein each spraying in said spraying step e) has a duration between about 15 seconds and 60 seconds.

16. Method according to any one of the claims 2-15, wherein the time interval between one spraying and the subsequent spraying in said spraying step e) is between about 10 minutes and 20 minutes.

17. Method according to any one of the preceding claims wherein said transformer oil is chosen from the group comprising: paraffinic oils, naphthenic oils and combinations thereof.

18. Method according to any one of the preceding claims, wherein said solvent is an organic solvent chosen from the group comprising: ethane, hexane, dearomatised heptane, trichloroethane, trieline and combinations thereof.

19. System (100) for treating transformer components contaminated with transformer oil, comprising:
- a fluid-tight container (9) wherein a treatment chamber (1) for at least one transformer component (C) is defined;
- a plurality of nozzles (11) positioned in said treatment chamber (1) and adapted to spray a solvent for said transformer oil;
- a device (24) for vacuum production in fluid communication with said treatment chamber (1);
- at least one heating element (12) in heat exchange relationship with said treatment chamber (1);
- at least one discharge line (8) of a liquid extraction mixture comprising said solvent and the transformer oil extracted from said at least one component (C).

20. System (100) according to claim 19, wherein said nozzles (11) are substantially uniformly distributed at the upper and lateral walls of said container (9).

21. System (100) according to claim 19 or 20, comprising a primary circuit (6) of the solvent in fluid communication with the treatment chamber (1) for feeding said nozzles (11) with solvent in liquid state drawn from a solvent storage tank (21), and bringing solvent extracted from the treatment chamber (1) back to said storage tank (21).

22. System (100) according to claim 21, wherein said primary circuit (6) comprises a condenser (61) adapted to condense vapour of said solvent extracted from said treatment chamber (1) by means of said device (24) for vacuum production.

23. System (100) according to any one of the claims 19-22, comprising a recirculation circuit (5) of the liquid extraction mixture for at least partially recirculating said liquid extraction mixture in said treatment chamber (1).

24. System (100) according to claim 23, wherein said recirculation circuit (5) comprises a heat exchanger (51) adapted to cool said liquid extraction mixture.

25. System (100) according to claim 24, wherein said recirculation circuit (5) comprises a by-pass line (52) of said heat exchanger (51).

26. System (100) according to any one of the claims 19-25, comprising a solvent recovery circuit (2) for recovering solvent from said liquid discharge mixture and feeding it again in said treatment chamber (1).

27. System (100) according to claim 26, wherein said recovery circuit (2) comprises a distillation unit (4) of said liquid discharge mixture adapted to separate solvent from the transformer oil extracted from said at least one component (C).

28. System (100) according to claim 27, wherein said recovery circuit (2) comprises a condenser (62) adapted to condense vapour of said solvent produced by said distillation unit (4).
